# EUROPÄISCHE PATENTSCHRIFT

(11) **EP 4 342 700 B1**
(45) Veröffentlichungstag und Bekanntmachung des Hinweises auf die Patenterteilung: **24.06.2026**
(21) Anmeldenummer: 22196822.5
(22) Anmeldetag: 21.09.2022
(51) Int. Cl.: B60J 1/00, B60J 1/18, C03B 23/025

(54) **HERSTELLUNG EINER FENSTERKONSTRUKTION, INSBESONDERE FÜR EIN WOHN- BZW. REISEMOBIL**
CONSTRUCTION OF A WINDOW, IN PARTICULAR FOR A DWELLING OR A CORRESPONDING BUILDING. MOTORHOME
FABRICATION D'UNE CONSTRUCTION DE FENÊTRE, EN PARTICULIER POUR UNE MAISON OU UN BÂTIMENT. CAMPING-CAR

(43) Veröffentlichungstag der Anmeldung: 27.03.2024
(73) Patentinhaber: Beck, Georg, 45731 Waltrop (DE); Penner, Johann, 45731 Waltrop (DE)
(72) Erfinder: Beck, Georg, 45731 Waltrop (DE); Penner, Johann, 45731 Waltrop (DE)
(74) Vertreter: Weisbrodt, Bernd

(56) Entgegenhaltungen:
- EP-B1- 0 810 978
- EP-B1- 1 635 026
- CN-B- 105 502 903
- JP-A- 2017 507 883

## Beschreibung

Die vorliegende Erfindung betrifft ein Verfahren zur Herstellung einer Fensterkonstruktion, eine hierzu verwendbare Stützvorrichtung sowie eine gemäß dem Verfahren hergestellte Fensterkonstruktion.

Ein Wohn- bzw. Reisemobil im Sinne der vorliegenden Erfindung ist ein Kraftfahrzeug mit einer zum Wohnen geeigneten Inneneinrichtung, welche häufig insbesondere der eines Wohnwagens ähnelt. Wohn- bzw. Reisemobile werden als Freizeitfahrzeuge zum Camping und/oder für Urlaube mit wechselnden Stand- und/oder Erlebnisorten eingesetzt oder beispielsweise von Geschäftsreisenden wie Handelsvertretern, Montagearbeitern oder dergleichen zum Übernachten oder als mobiles Büro an wechselnden Arbeitsorten verwendet.

Mit Wohn- bzw. Reisemobil wird ein bewohnbares Fahrzeug (Essen zubereiten, Schlafen, ggfs. mit Dusche und/oder Toilette) bezeichnet, dessen Schwerpunkt jedoch auf dem Reisen, also dem Fahren bzw. Standortwechseln, liegt. In aller Regel sind es ausgebaute Kleinbusse und/oder Kastenwagen, weshalb diese Fahrzeuge auch oft als Campingbus oder auch übergreifend als Camper bezeichnet werden. Heutzutage werden in Deutschland die Begriffe Reisemobil bzw. Wohnmobil jedoch synonym verwendet, wobei in Herstellerkatalogen und Fachzeitschriften meist von Reisemobil, umgangssprachlich jedoch überwiegend von Wohnmobil - und auch von Camper oder Campermobil - gesprochen wird. Reise- bzw. Wohnmobile im ursprünglichen Sinne werden unter Kastenwagen behandelt.

Zulassungstechnisch ist diese Gruppe von Fahrzeugen eine eigene Fahrzeugart und wird in den Zulassungsbescheinigungen, sofern eine neue EU-Typgenehmigung vorliegt, einheitlich als Wohnmobil bezeichnet, frühere Bezeichnungen wie So.-Kfz für sonstiges Kfz fallen damit weg bzw. sind entfallen.

Aus dem Stand der Technik sind Fenster für Wohn- bzw. Reisemobile bekannt, welche einen Luftaustausch zwischen dem Wohn- bzw. Reisemobil und der Umgebung ermöglichen. Sich öffnen lassende Fenster sind bisher lediglich an Seitenwänden eines Wohn- bzw. Reisemobils vorgesehen. Innerhalb einer Heckscheibe vorgesehene Fensteröffnungen sind hingegen nicht bekannt, was durch die in der Regel gebogene Form der Heckscheibe bedingt ist.

Bei sich öffnen lassenden Fenstern wird ferner prinzipiell zwischen so genannten Ausstellfenstern und Schiebefenstern unterschieden. Diese Fenster werden in vorhandene Außenwände von Wohn- bzw. Reisemobilen eingesetzt, was eine präzise und somit besonders zeitaufwändige Montage erforderlich macht. Insbesondere müssen passgenaue Öffnungen erstellt und eine zuverlässige Abdichtung zwischen Außenwand und Komponenten des Fensters sichergestellt werden.

Die EP 0 810 978 B1 offenbart ein Verfahren zum Biegen einer mit einem Ausschnitt versehenen Glasscheibe unter Verwendung eines die Glasscheibe abstützenden Formrings mit einer dem Umriss der Glasscheibe entsprechenden geometrischen Form, wobei die Glasscheibe während des Biegevorgangs im Randbereich der Glasscheibe durch in der Fläche der gewünschten Scheibenform wirkende Stützelemente mechanisch abgestützt wird.

Vor diesem Hintergrund liegt der vorliegenden Erfindung die Aufgabe zugrunde, eine Lösung bereitzustellen, welche eine Verwendung von Fensteröffnungen unabhängig von einer Scheibenform eines Wohn- bzw. Reisemobils ermöglicht, insbesondere auch bei gebogenen, d.h. nicht geradlinig verlaufenden, Heckscheiben.

Erfindungsgemäß wird diese Aufgabe gelöst durch ein Verfahren zur Herstellung einer Fensterkonstruktion gemäß Anspruch 1.

Dieser Lösung liegt die Erkenntnis zugrunde, dass durch eine abschnittsweise Begrenzung bzw. Blockierung einer Hauptfensterscheibe während eines Prozesses, in welchem selbige unter Wärmeeinwirkung in eine gewünschte gebogene Form gebracht wird, ein Scheibenabschnitt in einer planen Ausrichtung belassen werden kann, wodurch der anschließende Einbau eines sich öffnen lassenden Fenster erheblich vereinfacht wird.

Erfindungsgemäß umfasst das Verfahren ferner ein Anbringen einer einstückig ausgebildeten Rahmenkonstruktion auf einer Innenkante der Fensteröffnung, und ein Verbinden eines ersten Endes der angebrachten Rahmenkonstruktion mit einem zweiten Ende der angebrachten Rahmenkonstruktion, insbesondere mittels Schweißtechnik, Löttechnik oder Klebetechnik. Mittels einer solchen Rahmenkonstruktion können potenzielle Angriffsflächen durch Witterungseinflüsse verringert werden, da von außen auf ein Wohn- bzw. Reisemobil einwirkendes Wetter lediglich eine einzige Stelle der Fensterkonstruktion negativ beeinträchtigen kann.

Vorzugsweise umfasst das Verfahren ferner ein Einbringen einer sich öffnen lassenden Fensterscheibe in die mit der Rahmenkonstruktion versehene Fensteröffnung der Hauptfensterscheibe, wobei eine Verbindung der sich öffnen lassenden Fensterscheibe und der Rahmenkonstruktion mittels Scharnieren erfolgt. Auf diese Weise geschaffene so genannte Ausstellfenster haben den Vorteil, dass diese bei Witterungseinflüssen, z.B. Regen, Beeinträchtigungen auf den Innenraum des Wohn- bzw. Reisemobils minimieren.

In einer bevorzugten Ausgestaltung erfolgt das Einbringen der Fensteröffnung in die Hauptfensterscheibe mittels Wasserstrahlschneidetechnik oder mittels Laserschneidetechnik erfolgt. Die Nutzung derartiger Techniken hat den Vorteil, dass eine Verwendung von beispielsweise Einscheiben-Sicherheitsglas (ESG) möglich ist.

Vorteilhafterweise erfolgt das Erwärmen der Hauptfensterscheibe bei einer Temperatur von 650 bis 700 °C, insbesondere von 665 bis 685 °C. Eine derartige Temperatur bietet den Vorteil, dass lediglich eine vergleichsweise kurze Verweildauer der Hauptfensterscheibe in einer Einrichtung zur Erwärmung notwendig ist und so der Herstellungsprozess beschleunigt wird.

Vorzugsweise erfolgt das Erwärmen der Hauptfensterscheibe für eine Dauer von 100 bis 140 Sekunden, insbesondere von 110 bis 130 Sekunden.

In einer bevorzugten Ausgestaltung begrenzt die Begrenzungsvorrichtung während des Erwärmens der Hauptfensterscheibe ein Ausdehnen der Hauptfensterscheibe in Bezug auf den Bereich, in welchem sich die Fensteröffnung der Hauptfensterscheibe befindet, derart, dass eine Innenkante der Fensteröffnung einem planen Verlauf folgt. Auf diese Weise wird ermöglicht, dass anschließend eine Rahmenkonstruktion einfacher montiert werden kann, da in horizontaler Ebene keine Abweichungen, d.h. nach oben oder nach unten, der Hauptfensterscheibe vorliegen.

Vorteilhafterweise bestehen die Hauptfensterscheibe und/oder eine in der Fensteröffnung der Hauptfensterscheibe anordbare und sich öffnen lassende Fensterscheibe aus Einscheiben-Sicherheitsglas (ESG). Im Automobilbereich ist die Verwendung von ESG besonders vorteilhaft, da bei Unfällen dadurch Verletzungen der Fahrzeuginsassen minimiert werden.

Es wird zur Herstellung der Fensterkonstruktion eine Stützvorrichtung verwendet, umfassend: einen umlaufenden Auflagerahmen, welcher in horizontaler und/oder vertikaler Richtung eine gewölbte Kontur aufweist, und eine mittig innerhalb des Auflagerahmens angeordnete Begrenzungsvorrichtung, welche eine plane Oberfläche aufweist.

Eine derartige Stützvorrichtung erlaubt es, eine Scheibe zu schaffen, welche es ermöglicht, auf einfache Art und Weise ein sich öffnen lassendes Fenster in eine Fensteröffnung einzubauen.

Vorzugsweise weist der Auflagerahmen eine rechteckige Grundfläche mit vier Seitenwänden auf, wobei die gewölbte Kontur des Auflagerahmens, insbesondere eine gewölbte Kontur einer jeder Seitenwand, konkav oder konvex ist. Durch einen derartigen Auflagerahmen kann eine optimale Anpassung der Hauptfensterscheibe erfolgen, beispielsweise bei Verwendung selbiger als Heckscheibe, da diese oftmals eine gewölbte Form aufweisen.

Des Weiteren wird eine in Anspruch 11 definierte Fensterkonstruktion vorgeschlagen.

Eine solche Fensterkonstruktion, insbesondere für ein Wohn- bzw. Reisemobil, ist somit hergestellt durch Bereitstellen einer Hauptfensterscheibe, Einbringen einer Fensteröffnung in die Hauptfensterscheibe, Platzieren der Hauptfensterscheibe auf einer eine Begrenzungsvorrichtung umfassenden Stützvorrichtung mit einem Auflagerahmen, wobei die Begrenzungsvorrichtung eine plane Oberfläche umfasst und unterhalb eines Bereichs, in welchem sich die Fensteröffnung der Hauptfensterscheibe befindet, angeordnet ist, und Erwärmen der Hauptfensterscheibe derart, dass sich deren Fläche in horizontaler und/oder vertikaler Erstreckungsrichtung einer von der Stützvorrichtung definierten gewölbten Kontur anpasst.

In einer bevorzugten Ausgestaltung ist die sich öffnen lassende Fensterscheibe der Fensterkonstruktion schwenkbar an der Rahmenkonstruktion gehalten. Dadurch kann ein so genanntes Ausstellfenster realisiert werden.

Vorteilhafterweise umfasst die Fensterkonstruktion wenigstens eine an der sich öffnen lassenden Fensterscheibe vorgesehene Gasdruckfeder. Dies ermöglicht ein besonders einfaches Öffnen der Fensterscheibe mit geringem Kraftaufwand.

Vorzugsweise umfasst die Fensterkonstruktion ferner wenigstens ein an der sich öffnen lassenden Fensterscheibe vorgesehenes Verriegelungselement. In einer bevorzugten Ausgestaltung umfasst die Fensterkonstruktion wenigstens ein mit dem wenigstens einen Verriegelungselement zusammenwirkendes Rastelement. Damit ist es auf einfache Art und Weise möglich, ein Öffnen der Fensterkonstruktion von außerhalb des Wohn- bzw. Reisemobils zu verhindern. Das wenigstens eine Verriegelungselement der erfindungsgemäßen Fensterkonstruktion ist vorteilhafterweise derart ausgestaltet, dass in Schließstellung der Fensterscheibe in der Hauptfensterscheibe der Fensterkonstruktion ein vorbestimmter bzw. definierter Anpressdruck gegenüber einer insbesondere umlaufenden Dichtung zwischen Hauptfensterscheibe und Fensterscheibe der Fensterkonstruktion gegeben bzw. sicherstellbar ist. So werden vorteilhafterweise etwaige Undichtigkeiten, welche ansonsten bei vorbekannten Fensterkonstruktionen von sogenannten Ausstellfenstern, zumindest nach ein paar Jahren Gebrauchszeit, gegeben sind, vermieden. Vorteilhafterweise ist der Anpressdruck einstellbar, so dass ein Nachstellen des Anpressdrucks zur Vermeidung etwaiger Undichtigkeiten ermöglicht ist, insbesondere um zumindest nach einigen Jahren Gebrauchszeit eine Anpassung des Anpressdrucks im Hinblick auf eine Dichtigkeit der erfindungsgemäßen Fensterkonstruktion erfolgen kann. Bei den bisher im Stand der Technik vorbekannten Fensterkonstruktionen von sogenannten Ausstellfenstern ist im Falle von derartig auftretenden Undichtigkeiten in der Regel ein kostenintensiver Austausch der Fensterkonstruktion erforderlich, der erfindungsgemäß vermieden werden kann.

Vorzugsweise weist die Rahmenkonstruktion einen inneren Rahmen und einen damit verbundenen äußeren Rahmen auf. Eine solche Rahmenkonstruktion erlaubt es, die sich öffnen lassende Fensterscheibe platzsparend und dennoch fest an der Hauptfensterscheibe zu befestigen.

Vorteilhafterweise umfasst die Fensterkonstruktion eine an dem inneren Rahmen angeordnete Insektenschutzvorrichtung. Eine derartige Konstruktion ermöglicht es auf einfache Art und Weise, einen Schutz vor Insekten bereitzustellen, ohne erhebliche konstruktive Modifikationen an der Fensterkonstruktion vornehmen zu müssen. Eine solche Insektenschutzvorrichtung kann vorteilhafterweise beispielsweise auch nachträglich installiert werden.

Vorzugsweise umfasst die Insektenschutzvorrichtung einen Rahmen und ein darin horizontal oder vertikal beweglich angeordnetes Element. Dies erlaubt eine besonders platzsparende Konstruktion, beispielsweise im Vergleich zu einer nach innen schwenkbar angeordneten Schutzvorrichtung.

In einer bevorzugten Ausgestaltung ist das beweglich angeordnete Element als Rollo oder als Plissee ausgebildet. Alternativ ist das beweglich angeordnete Element als eine Lamellen umfassende Jalousie ausgebildet. Die vorgenannten Ausgestaltungen haben allesamt den Vorteil, dass im ungenutzten Zustand nur ein vergleichsweise kleiner Raum zur Verstauung des beweglich angeordneten Elements erforderlich ist.

Vorteilhafterweise umfasst das beweglich angeordnete Element ein Griffelement, insbesondere eine Griffleiste. Dadurch wird einem Nutzer ein komfortables Betätigen der Insektenschutzvorrichtung ermöglicht.

Vorteilhafterweise ist die mit einer sich öffnen lassenden Fensterscheibe verschließbare Fensteröffnung und dementsprechend auch die Fensterscheibe rechteckig bzw. viereckig mit leicht gerundeten Ecken ausgestaltet. Bei entsprechender Anordnung vorteilhafterweise jeweils eines Verriegelungselements in den entsprechenden gerundeten Ecken bzw. mit Druckeinleitung über diese gerundeten Ecken ist in Schließstellung der Fensterkonstruktion und Aktivierung der Verriegelungen vorteilhafterweise ein Anpressdruck erzeugbar, der Undichtigkeiten der erfindungsgemäßen Fensterkonstruktion vermeidet.

Erfindungsgemäß kann alternativ vorgesehen sein, dass die Rahmenkonstruktion derart ausgebildet ist, dass eine innerhalb der Rahmenkonstruktion mittels erster Führungsschienen beweglich angeordnete Fensterscheibe, und ein innerhalb der Rahmenkonstruktion mittels zweiter Führungsschienen beweglich angeordnetes Insektenschutzgitter vorgesehen sind, wobei die beweglich angeordnete Fensterscheibe und das beweglich angeordnete Insektenschutzgitter dazu eingerichtet sind, die in der Hauptfensterscheibe vorgesehene Fensteröffnung zu verschließen.

Vorteilhafterweise umfasst die Fensterkonstruktion ein Verschlusselement, welches zur Blockierung einer Bewegung der beweglich angeordneten und sich öffnen lassenden Fensterscheibe und zur Blockierung einer Bewegung des Insektenschutzgitters eingerichtet ist. Damit ist es auf einfache Art und Weise möglich, ein Öffnen der Fensterkonstruktion von außerhalb des Wohn- bzw. Reisemobils zu verhindern.

Vorzugsweise ist das Verschlusselement schwenkbar an der Rahmenkonstruktion angeordnet. Dies ist insbesondere von Vorteil, da so ein Schließmechanismus auf einfache Art und Weise realisiert werden kann.

Gemäß einer bevorzugten Ausgestaltung ist das Verschlusselement an einem unteren Rand der Rahmenkonstruktion angeordnet. Hierdurch wird eine einfache Bedienbarkeit vom Innenraum des Wohn- bzw. Reisemobils aus gewährleistet.

Vorteilhafterweise ist das Verschlusselement im blockierten Zustand benachbart zu einer seitlichen Außenkante der beweglich angeordneten Fensterscheibe und zu einer seitlichen Außenkante des Insektenschutzgitters angeordnet. Durch diese Anordnung kann eine Bewegung von Fensterscheibe und Insektenschutzgitter in horizontaler Richtung nahezu ausgeschlossen werden, ohne dass es hierfür einer komplexen Konstruktion bedarf.

Vorzugsweise umfasst die Fensterkonstruktion ferner eine an der beweglich angeordneten Fensterscheibe vorgesehene, vorzugsweise vertikal auf der Fensterscheibe verlaufende, Griffleiste. Mittels einer solchen Griffleiste kann ein sich im Innenraum des Wohn- bzw. Reisemobils aufhaltender Nutzer die Fensterscheibe, welche im Vergleich zum Insektenschutzgitter ein höheres Eigengewicht aufweist, leichter öffnen.

Gemäß einer bevorzugten Ausgestaltung ist das Insektenschutzgitter integral geformt, insbesondere als Lochplatte mit einem ungelochten Randbereich. Eine derartige Ausgestaltung verbessert die Robustheit der gesamten Konstruktion weiter, insbesondere da Beschädigungen am Insektenschutzgitter, im Vergleich zu konventionellen Insektenschutzgittern, weniger leicht auftreten können.

Vorteilhafterweise umfasst das Insektenschutzgitter einen umlaufenden Rahmen und ein Gitternetz. Dadurch wird es ermöglicht, dass eine stabile horizontale Verschiebebewegung des Insektenschutzgitters beibehalten werden kann und dennoch ein Schutz vor Insekten gegeben ist.

Vorzugsweise weist der umlaufende Rahmen des Insektenschutzgitters eine als Griffmulde fungierende Aussparung auf. Dies ermöglicht ein besseres Öffnen und Schließen des Insektenschutzgitters, ohne dabei die Funktion der Fensterscheibe zu beeinflussen oder Platz im Innenraum des Wohn- bzw. Reisemobils zu beanspruchen.

Gemäß einer bevorzugten Ausgestaltung sind die ersten Führungsschienen und die zweiten Führungsschienen jeweils paarweise angeordnet an einer Oberseite und an einer Unterseite der Rahmenkonstruktion vorgesehen. Die jeweils paarweise Anordnung der Führungsschienen ermöglicht eine einfache und platzsparende Konstruktion, welche dennoch robust ist.

Vorteilhafterweise greift eine obere Außenkante der beweglich angeordneten Fensterscheibe in die an der Oberseite angeordnete erste Führungsschiene, eine untere Außenkante der beweglich angeordneten Fensterscheibe in die an der Unterseite angeordnete erste Führungsschiene, eine obere Außenkante des Insektenschutzgitters in die an der Oberseite angeordnete zweite Führungsschiene und eine untere Außenkante des Insektenschutzgitters in die an der Unterseite angeordnete zweite Führungsschiene ein. Mittels dieser Konstruktion kann eine gleichmäßige Verschiebebewegung von der sich öffnen lassenden, beweglich angeordneten Fensterscheibe und Insektenschutzgitter ermöglicht werden.

Vorzugsweise umfasst die Fensterkonstruktion eine in einem seitlichen Randbereich der in der Hauptfensterscheibe vorgesehenen Fensteröffnung angeordnete und in Richtung der Innenseite der Hauptfensterscheibe gerichtete Dichtung. Diese dient dazu, einen Luftabschluss des Wohn- bzw. Reisemobils nach außen hin zu realisieren, so dass keine (kalte) Außenluft zwischen der beweglich angeordneten Fensterscheibe und der Hauptfensterscheibe in das Wohn- bzw. Reisemobil dringen kann.

Gemäß einer bevorzugten Ausgestaltung ist die Rahmenkonstruktion im Wesentlichen U-förmig ausgebildet. Eine solche U-förmige Ausgestaltung ermöglicht es, dass die beweglich angeordnete Fensterscheibe und das Insektenschutzgitter nach oben und nach unten hin sowie in Richtung der Seite, zu welcher selbige zu schließen sind, einen Abschluss bilden, so dass von außerhalb des Wohn- bzw. Reisemobils insbesondere kein Regen in das Innere desselben eintreten kann.

Vorteilhafterweise erstreckt sich die Rahmenkonstruktion in horizontaler Richtung über wenigstens 70% der Breite der Hauptfensterscheibe, insbesondere in einem Bereich von 70% bis 90% der Breite. Dadurch wird unter Gewährleistung einer ausreichenden Stabilität der Gesamtkonstruktion eine möglichst große Öffnungsmöglichkeit innerhalb der Hauptfensterscheibe geschaffen.

Vorzugsweise ist die Hauptfensterscheibe und/oder die beweglich angeordnete und sich öffnen lassende Fensterscheibe eine Glasscheibe, wobei vorzugsweise die als Hauptfensterscheibe bzw. die als Fensterscheibe vorgesehene Glasscheibe aus gehärtetem bzw. vorgespanntem Glas ausgebildet ist, besonders bevorzugt ein Einscheiben-Sicherheitsglas (ESG) ist, insbesondere mit Zulassung bzw. Eignung für sogenannte Autoseitenscheiben oder Autoheckscheiben. Eine derartige Ausgestaltung ermöglicht einen einfachen Austausch bestehender Scheiben an Fahrzeugen, welche zu einem Wohn- bzw. Reisemobil umgerüstet werden.

Weitere Einzelheiten, Merkmale und Vorteile der Erfindung werden nachfolgend anhand der in den Figuren der Zeichnungen dargestellten Ausführungsbeispiele näher erläutert.

### Dabei zeigen:

- Fig. 1: in einer perspektivischen Ansicht ein Ausführungsbeispiel eines erfindungsgemäßen Verfahrens zur Herstellung einer Fensterkonstruktion;
- Fig. 2: in einer schematischen Schnittansicht ein erstes Ausführungsbeispiel einer erfindungsgemäßen Fensterkonstruktion in geöffnetem Zustand; und
- Fig. 3: in einer perspektivischen Ansicht ein zweites Ausführungsbeispiel einer erfindungsgemäßen Fensterkonstruktion in ungeöffnetem Zustand, betrachtet von einem Innenraum eines Wohn- bzw. Reisemobils aus.

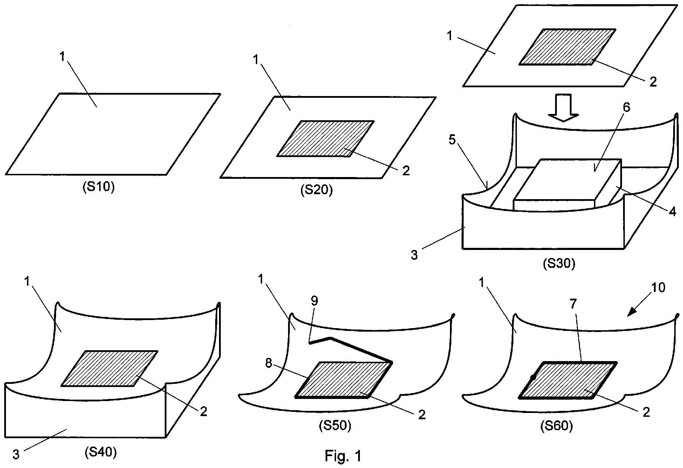

Fig. 1 zeigt in einer perspektivischen Ansicht ein Ausführungsbeispiel eines erfindungsgemäßen Verfahrens zur Herstellung einer Fensterkonstruktion 10. In einem ersten Verfahrensschritt S10 wird zunächst eine Hauptfensterscheibe 1 bereitgestellt. Bei dieser Hauptfensterscheibe 1 kann es sich beispielsweise um eine Glasscheibe handeln, die als Heckscheibe eines Wohn- bzw. Reisemobils vorgesehen ist.

Anschließend erfolgt in einem zweiten Verfahrensschritt S20 ein Einbringen einer Fensteröffnung 2 in die Hauptfensterscheibe 1. Das Einbringen der Fensteröffnung 2 in die Hauptfensterscheibe 1 kann mittels Wasserstrahlschneidetechnik oder mittels Laserschneidetechnik erfolgen.

Danach wird in Verfahrensschritt S30 die Hauptfensterscheibe 1, welche nunmehr die Fensteröffnung 2 umfasst, auf einer Stützvorrichtung 3 mit einem Auflagerahmen 5 angeordnet. Die Stützvorrichtung 3 umfasst ferner eine Begrenzungsvorrichtung 4, welche mittig innerhalb des Auflagerahmens 5 angeordnet ist und eine plane Oberfläche 6 aufweist. Die Begrenzungsvorrichtung 4 ist unterhalb eines Bereichs, in welchem sich die Fensteröffnung 2 der Hauptfensterscheibe 1 befindet, angeordnet.

Anhand von Schritt S30 in Fig. 1 ist ferner erkennbar, dass der umlaufende Auflagerahmen 5 der Stützvorrichtung 3 in horizontaler und vertikaler Richtung eine gewölbte Kontur aufweist. Es kann jedoch auch vorgesehen sein, dass eine Wölbung lediglich in horizontaler Richtung oder lediglich in vertikaler Richtung gegeben ist, d.h. nur zwei gegenüberliegende Seiten des Auflagerahmens 5 gewölbt sind. Hier ist insbesondere eine konkave oder eine konvexe Wölbung in Bezug auf eine Oberflächenkontur einer jeweiligen Seite des Auflagerahmens 5 möglich.

Im nächsten Verfahrensschritt S40 erfolgt ein Erwärmen der Hauptfensterscheibe 1 derart, dass sich deren Fläche bzw. Oberfläche in horizontaler und/oder vertikaler Erstreckungsrichtung einer von der Stützvorrichtung 3 definierten gewölbten Kontur anpasst. Mit anderen Worten senkt sich die Hauptfensterscheibe 1 ab, so dass sie auf den Seiten des Auflagerahmens 5 aufliegt. In Bezug auf den inneren Teil der Hauptfensterscheibe 1, welcher die Fensteröffnung 2 umfasst, ist festzuhalten, dass dieser sich durch Ausdehnung auf die Stützvorrichtung 3 absenkt bzw. legt, so dass eine Innenkante der Fensteröffnung 2 (in horizontaler Ebene) einem planen Verlauf folgt.

Das Erwärmen der Hauptfensterscheibe 1 gemäß Verfahrensschritt S40 kann bei einer Temperatur von 650 bis 700 °C und für eine Dauer von 100 bis 140 Sekunden erfolgen.

Gemäß einem weiteren Verfahrensschritt S50 kann zwecks weiterer Verarbeitung vorgesehen sein, dass eine einstückig ausgebildete Rahmenkonstruktion 7 auf einer Innenkante der Fensteröffnung 2 angebracht wird, vorzugsweise mittels Klebung.

Anschließend erfolgt gemäß Verfahrensschritt S60 ein Verbinden eines ersten Endes 8 der angebrachten Rahmenkonstruktion 7 mit einem zweiten Ende 9 der angebrachten Rahmenkonstruktion 7, zum Beispiels mittels Löttechnik.

Alternativ kann die Rahmenkonstruktion 7 auch zweistückig ausgebildet sein und einen inneren Rahmen 7a sowie einen äußeren Rahmen 7b umfassen, wobei diese beiden Rahmen 7a/7b ebenfalls mittels Schweißtechnik, Löttechnik oder Klebetechnik verbindbar sind.

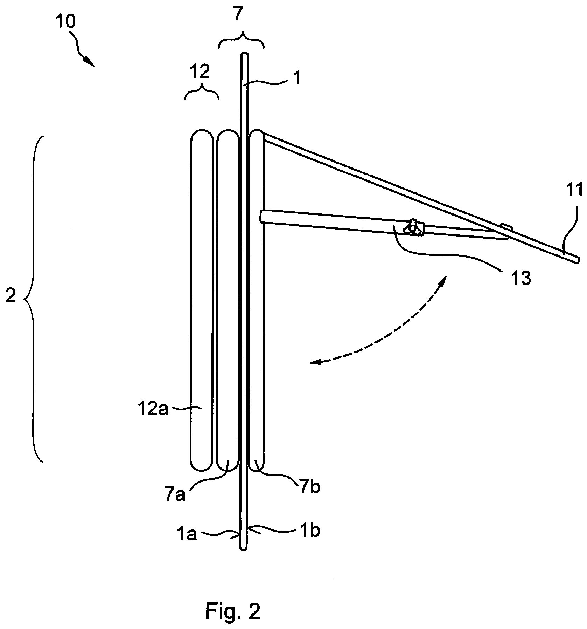

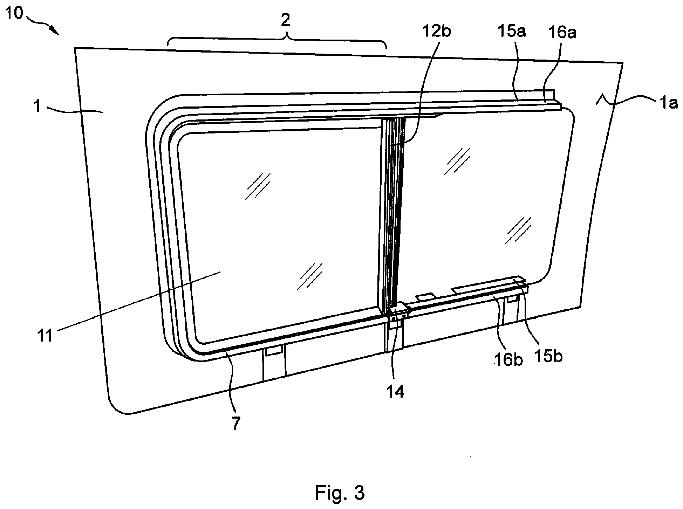

Prinzipiell kann auf Basis einer auf diese Weise vorgesehenen Rahmenkonstruktion 7 ein so genanntes Ausstellfenster (vgl. Fig. 2) oder ein Schiebefenster (vgl. Fig. 3) innerhalb der Hauptfensterscheibe 1 angeordnet werden.

Sowohl die Hauptfensterscheibe 1 als auch eine in der Fensteröffnung 2 der Hauptfensterscheibe 1 anordbare und sich öffnen lassende Fensterscheibe 11 kann dabei aus Einscheiben-Sicherheitsglas (ESG) bestehen.

Fig. 2 zeigt in einer schematischen Schnittansicht ein erstes Ausführungsbeispiel einer erfindungsgemäßen Fensterkonstruktion 10 in geöffnetem Zustand. Die Fensterkonstruktion 10 umfasst eine zumindest teilweise innerhalb der (in Fig. 2 nicht sichtbaren) Fensteröffnung 2 angeordnete Rahmenkonstruktion 7, welche einen an einer Innenseite 1a der Hauptfensterscheibe 1 angeordneten inneren Rahmen 7a und einen damit verbundenen an einer Außenseite 1b der Hauptfensterscheibe 1 angeordneten äußeren Rahmen 7b umfasst.

Dabei überlappt wenigstens ein Teil des inneren Rahmens 7a und/oder des äußeren Rahmens 7b eine Innenkante der Fensteröffnung 2 insoweit, als dass eine Verbindung von innerem Rahmen 7a und äußerem Rahmen 7b ermöglicht wird. Eine solche Verbindung kann beispielsweise mittels Verklebung und/oder Verschraubung realisiert sein. Die Rahmenkonstruktion 7 kann auch integral ausgebildet sein, so dass innerer Rahmen 7a und äußerer Rahmen 7b aus einem einzigen Werkstück gebildet sind, welches beispielsweise eine Nut aufweist, um die Rahmenkonstruktion 7 auf die Innenkante der Fensteröffnung 2 aufzusetzen.

Die Innenkante der Fensteröffnung 2 ist vorzugsweise mittels einer umlaufenden Dichtung versehen, durch welche ein luftdichter Abschluss zwischen der Rahmenkonstruktion 7 und der Fensteröffnung 2 erreicht wird.

An dem inneren Rahmen 7a ist eine Insektenschutzvorrichtung 12 angeordnet, indem ein Rahmen 12a der Insektenschutzvorrichtung 12 mit dem inneren Rahmen 7a verbunden wird, beispielsweise durch Kleben und/oder Schrauben. Innerhalb des Rahmens 12a der Insektenschutzvorrichtung 12 ist ein (in Fig. 2 nicht sichtbares) horizontal oder vertikal beweglich angeordnetes Element 12b vorgesehen.

Die sich öffnen lassende Fensterscheibe 11 ist schwenkbar (in Fig. 2 stilisiert dargestellt durch den Doppelpfeil) an dem äußeren Rahmen 7b gehalten, beispielsweise mittels entsprechender Scharniere und zur Ermöglichung eines einfachen Öffnens mit wenigstens einer Gasdruckfeder 13 verbunden. Das Ende der Gasdruckfeder 13, welches nicht an der sich öffnen lassenden Fensterscheibe 1 befestigt ist, kann entweder am äußeren Rahmen 7b oder am inneren Rahmen 7a befestigt sein.

Fig. 3 zeigt in einer perspektivischen Ansicht ein zweites Ausführungsbeispiel einer erfindungsgemäßen Fensterkonstruktion 10 in ungeöffnetem Zustand. Die Fensterkonstruktion 10 weist eine Hauptfensterscheibe 1, auf, von welcher in Fig. 3 die von einem Innenraum des Wohn- bzw. Reisemobils sichtbare Innenseite 1a zu sehen ist. Auf der Innenseite 1 a der Hauptfensterscheibe 1 ist eine Rahmenkonstruktion 7 vorgesehen, welche mit der Hauptfensterscheibe 1 fest verbunden ist. Die Rahmenkonstruktion 7 umschließt dabei eine in der Hauptfensterscheibe 1 vorgesehene Öffnung 2, vorliegend gegeben im linken Teil der Hauptfensterscheibe 1, zumindest teilweise. Die Hauptfensterscheibe 1 ist vorliegend insbesondere ein Einscheiben-Sicherheitsglas (ESG), insbesondere mit Zulassung bzw. Eignung für sogenannte Autoseitenscheiben oder Autoheckscheiben.

Die Rahmenkonstruktion 7 weist ferner eine obere erste Führungsschiene 15a und eine untere erste Führungsschiene 15b auf, wobei eine obere Außenkante einer sich öffnen lassenden Fensterscheibe 11 in die an der Oberseite angeordnete erste Führungsschiene 15a eingreift und eine untere Außenkante der sich öffnen lassenden Fensterscheibe 11 in die an der Unterseite angeordnete erste Führungsschiene 15b eingreift. Die sich öffnen lassende Fensterscheibe 11 ist vorliegend insbesondere ein Einscheiben-Sicherheitsglas (ESG), insbesondere mit Zulassung bzw. Eignung für sogenannte Autoseitenscheiben oder Autoheckscheiben.

Ferner weist die Rahmenkonstruktion 7 eine obere zweite Führungsschiene 16a und eine untere zweite Führungsschiene 16b auf, wobei eine obere Außenkante eines (in Fig. 3 geöffnet dargestellten) Insektenschutzgitters 12b in die an der Oberseite angeordnete zweite Führungsschiene 16a eingreift und eine untere Außenkante des Insektenschutzgitters 12b in die an der Unterseite angeordnete zweite Führungsschiene 16b eingreift. Demnach sind die ersten und zweiten Führungsschienen 15a/15b bzw. 16a/16b jeweils paarweise angeordnet an einer Oberseite und an einer Unterseite der Rahmenkonstruktion 7 vorgesehen.

Die Fensterscheibe 11 ist innerhalb der Rahmenkonstruktion 7 mittels der ersten Führungsschienen 15a/15b beweglich angeordnet. Das Insektenschutzgitter 12b ist innerhalb der Rahmenkonstruktion 7 hingegen mittels der zweiten Führungsschienen 16a/16b beweglich angeordnet. Demnach sind die beweglich angeordnete Fensterscheibe 11 und das beweglich angeordnete Insektenschutzgitter 12b dazu eingerichtet, die in der Hauptfensterscheibe 1 vorgesehene Öffnung 2 zu verschließen.

Des Weiteren ist in Fig. 3 ein Verschlusselement 14 gezeigt, welches zur Blockierung einer Bewegung der Fensterscheibe 11 und zur Blockierung einer Bewegung des Insektenschutzgitters 12b eingerichtet ist. Vorliegend ist das Verschlusselement 14 schwenkbar an der Rahmenkonstruktion 7 angeordnet.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

### Bezugszeichenliste:

- 1: Hauptfensterscheibe
- 2: Fensteröffnung
- 3: Stützvorrichtung
- 4: Begrenzungsvorrichtung
- 5: Auflagerahmen
- 6: Oberfläche der Begrenzungsvorrichtung
- 7: Rahmenkonstruktion
- 7a: innerer Rahmen der Rahmenkonstruktion
- 7b: äußerer Rahmen der Rahmenkonstruktion
- 8: erstes Ende der Rahmenkonstruktion
- 9: zweites Ende der Rahmenkonstruktion
- 10: Fensterkonstruktion
- 11: sich öffnen lassende Fensterscheibe
- 12: Insektenschutzvorrichtung
- 12a: Rahmen der Insektenschutzvorrichtung
- 12b: bewegliches Element der Insektenschutzvorrichtung (Gitter)
- 13: Gasdruckfeder
- 14: Verschlusselement
- 15a: erste Führungsschiene (oben)
- 15b: erste Führungsschiene (unten)
- 16a: zweite Führungsschiene (oben)
- 16b: zweite Führungsschiene (unten)

- S10: Verfahrensschritt
- S20: Verfahrensschritt
- S30: Verfahrensschritt
- S40: Verfahrensschritt
- S50: Verfahrensschritt
- S60: Verfahrensschritt

## Patentansprüche

1. Verfahren zur Herstellung einer Fensterkonstruktion (10), insbesondere für ein Wohn- bzw. Reisemobil, umfassend die Schritte:
Bereitstellen (S10) einer Hauptfensterscheibe (1),
Einbringen (S20) einer Fensteröffnung (2) in die Hauptfensterscheibe (1),
Platzieren (S30) der Hauptfensterscheibe (1) auf einer eine Begrenzungsvorrichtung (4) umfassenden Stützvorrichtung (3) mit einem Auflagerahmen (5), wobei die Begrenzungsvorrichtung (4) eine plane Oberfläche (6) umfasst und unterhalb eines Bereichs, in welchem sich die Fensteröffnung (2) der Hauptfensterscheibe (1) befindet, angeordnet ist,
Erwärmen (S40) der Hauptfensterscheibe (1) derart, dass sich deren Fläche in horizontaler und/oder vertikaler Erstreckungsrichtung einer von der Stützvorrichtung (3) definierten gewölbten Kontur anpasst,
Anbringen (S50) einer einstückig ausgebildeten Rahmenkonstruktion (7) auf einer Innenkante der Fensteröffnung (2),
und
Verbinden (S60) eines ersten Endes (8) der angebrachten Rahmenkonstruktion (7) mit einem zweiten Ende (9) der angebrachten Rahmenkonstruktion (7).

2. Verfahren nach Anspruch 1, wobei das Verbinden (S60) mittels Schweißtechnik, Löttechnik oder Klebetechnik erfolgt.

3. Verfahren nach Anspruch 2, ferner umfassend:
Einbringen einer sich öffnen lassenden Fensterscheibe in die mit der Rahmenkonstruktion (7) versehene Fensteröffnung (2) der Hauptfensterscheibe (1), wobei eine Verbindung der sich öffnen lassenden Fensterscheibe und der Rahmenkonstruktion (7) mittels Scharnieren erfolgt.

4. Verfahren nach einem der Ansprüche 1 bis 3, wobei das Einbringen der Fensteröffnung (2) in die Hauptfensterscheibe (1) mittels Wasserstrahlschneidetechnik oder mittels Laserschneidetechnik erfolgt.

5. Verfahren nach einem der Ansprüche 1 bis 4, wobei das Erwärmen (S40) der Hauptfensterscheibe (1) bei einer Temperatur von 650 bis 700 °C, insbesondere von 665 bis 685 °C, erfolgt.

6. Verfahren nach einem der Ansprüche 1 bis 5, wobei das Erwärmen (S40) der Hauptfensterscheibe (1) für eine Dauer von 100 bis 140 Sekunden, insbesondere von 110 bis 130 Sekunden, erfolgt.

7. Verfahren nach einem der Ansprüche 1 bis 6, wobei die Begrenzungsvorrichtung (4) während des Erwärmens (S40) der Hauptfensterscheibe (1) ein Ausdehnen der Hauptfensterscheibe (1) in Bezug auf den Bereich, in welchem sich die Fensteröffnung (2) der Hauptfensterscheibe (1) befindet, derart begrenzt, dass eine Innenkante der Fensteröffnung (2) einem planen Verlauf folgt.

8. Verfahren nach einem der Ansprüche 1 bis 7, wobei die Hauptfensterscheibe (1) und/oder eine in der Fensteröffnung (2) der Hauptfensterscheibe (1) anordbare und sich öffnen lassende Fensterscheibe aus Einscheiben-Sicherheitsglas, ESG, bestehen.

9. Verfahren nach einem der Ansprüche 1 bis 8, wobei der Auflagerahmen (5) der Stützvorrichtung (3) in horizontaler und/oder vertikaler Richtung eine gewölbte Kontur aufweist,
und
die Begrenzungsvorrichtung (4) mittig innerhalb des Auflagerahmens (5) angeordnet ist und eine plane Oberfläche (6) aufweist.

10. Verfahren nach Anspruch 9, wobei der Auflagerahmen (5) eine rechteckige Grundfläche mit vier Seitenwänden aufweist und die gewölbte Kontur des Auflagerahmens (5), insbesondere eine gewölbte Kontur einer jeder Seitenwand, konkav oder konvex ist.

11. Fensterkonstruktion (10), insbesondere für ein Wohn- bzw. Reisemobil, hergestellt durch das Verfahren gemäß einem der Ansprüche 1 bis 10.

12. Fensterkonstruktion (10) nach Anspruch 11, wobei die sich öffnen lassende Fensterscheibe schwenkbar an der Rahmenkonstruktion (7) gehalten ist.

13. Fensterkonstruktion (10) nach Anspruch 11 oder Anspruch 12, ferner umfassend wenigstens eine an der sich öffnen lassenden Fensterscheibe vorgesehene Gasdruckfeder.

14. Fensterkonstruktion (10) nach einem der Ansprüche 11 bis 13, ferner umfassend wenigstens ein an der sich öffnen lassenden Fensterscheibe vorgesehenes Verriegelungselement.

15. Fensterkonstruktion (10) nach Anspruch 14, ferner umfassend wenigstens ein mit dem wenigstens einen Verriegelungselement zusammenwirkendes Rastelement, welches an der Rahmenkonstruktion (7) angeordnet ist.

## Claims

1. A method for manufacturing a window assembly (10), in particular for a motorhome or campervan, comprising the steps of:
Providing (S10) a main window pane (1),
forming (S20) a window opening (2) in the main window pane (1),
placing (S30) the main window pane (1) on a support device (3) comprising a boundary device (4) with a support frame (5), wherein the boundary device (4) comprises a flat surface (6) and is arranged below a region in which the window opening (2) of the main window pane (1) is located,
heating (S40) the main window pane (1) in such a way that its surface adapts to a curved contour defined by the support device (3) in the horizontal and/or vertical direction of extension,
attaching (S50) a one-piece frame structure (7) to an inner edge of the window opening (2),
and
connecting (S60) a first end (8) of the attached frame structure (7) to a second end (9) of the attached frame structure (7).

2. The method according to claim 1, wherein the joining (S60) is carried out by means of welding, soldering or adhesive bonding.

3. The method according to claim 2, further comprising:
Inserting an openable window pane into the window opening (2) of the main window pane (1) provided with the frame structure (7), wherein the openable window pane and the frame structure (7) are connected by means of hinges.

4. A method according to any one of claims 1 to 3, wherein the window opening (2) is formed in the main window pane (1) by means of water jet cutting or laser cutting.

5. A method according to any one of claims 1 to 4, wherein the main window pane (1) is heated (S40) to a temperature of 650 to 700 °C, in particular 665 to 685 °C.

6. A method according to any one of claims 1 to 5, wherein the heating (S40) of the main window pane (1) takes place for a duration of 100 to 140 seconds, in particular 110 to 130 seconds.

7. A method according to any one of claims 1 to 6, wherein the limiting device (4) limits, during the heating (S40) of the main window pane (1), the expansion of the main window pane (1) with respect to the area in which the window opening (2) of the main window pane (1) is located, such that an inner edge of the window opening (2) follows a flat contour.

8. A method according to any one of claims 1 to 7, wherein the main window pane (1) and/or a window pane made of toughened safety glass (ESG) which can be arranged in the window opening (2) of the main window pane (1) and opened consists of such glass.

9. A method according to any one of claims 1 to 8, wherein the support frame (5) of the support device (3) has a curved contour in the horizontal and/or vertical direction,
and
the boundary device (4) is arranged centrally within the support frame (5) and has a flat surface (6).

10. A method according to claim 9, wherein the support frame (5) has a rectangular base with four side walls and the curved contour of the support frame (5), in particular a curved contour of each side wall, is concave or convex.

11. Window construction (10), in particular for a motorhome or camper van, manufactured by the method according to any one of claims 1 to 10.

12. Window assembly (10) according to claim 11, wherein the openable window pane is pivotally mounted on the frame assembly (7).

13. Window assembly (10) according to claim 11 or claim 12, further comprising at least one gas spring provided on the openable window pane.

14. A window assembly (10) according to any one of claims 11 to 13, further comprising at least one locking element provided on the openable window pane.

15. A window assembly (10) according to claim 14, further comprising at least one latching element cooperating with the at least one locking element, which is arranged on the frame assembly (7).

## Revendications

1. Procédé de fabrication d'une structure de fenêtre (10), en particulier pour un camping-car ou un mobil-home, comprenant les étapes suivantes:
Fournir (S10) une vitre principale (1),
réalisation (S20) d'une ouverture de fenêtre (2) dans la vitre principale (1),
le placement (S30) de la vitre principale (1) sur un dispositif de support (3) comprenant un dispositif de délimitation (4) et muni d'un cadre d'appui (5),
le dispositif de délimitation (4) comprenant une surface plane (6) et étant disposé en dessous d'une zone dans laquelle se trouve l'ouverture de fenêtre (2) de la vitre principale (1),
chauffage (S40) de la vitre principale (1) de telle sorte que sa surface s'adapte, dans le sens horizontal et/ou vertical, à un contour bombé défini par le dispositif de support (3),
la mise en place (S50) d'une structure de cadre (7) formée d'une seule pièce sur un bord intérieur de l'ouverture de fenêtre (2),
et
raccorder (S60) une première extrémité (8) de la structure de cadre (7) fixée à une deuxième extrémité (9) de la structure de cadre (7) fixée.

2. Procédé selon la revendication 1, dans lequel la liaison (S60) est réalisée par soudage, brasage ou collage.

3. Procédé selon la revendication 2, comprenant en outre:
la mise en place d'une vitre ouvrante dans l'ouverture de fenêtre (2) de la vitre principale (1) pourvue de la structure de cadre (7), la liaison entre la vitre ouvrante et la structure de cadre (7) s'effectuant au moyen de charnières.

4. Procédé selon l'une des revendications 1 à 3, dans lequel l'ouverture de fenêtre (2) est pratiquée dans la vitre principale (1) au moyen d'une technique de découpe au jet d'eau ou d'une technique de découpe au laser.

5. Procédé selon l'une des revendications 1 à 4, dans lequel le chauffage (S40) de la vitre principale (1) s'effectue à une température comprise entre 650 et 700 °C, en particulier entre 665 et 685 °C.

6. Procédé selon l'une des revendications 1 à 5, dans lequel le chauffage (S40) de la vitre principale (1) s'effectue pendant une durée de 100 à 140 secondes, en particulier de 110 à 130 secondes.

7. Procédé selon l'une des revendications 1 à 6, dans lequel le dispositif de limitation (4) limite, pendant le chauffage (S40) de la vitre principale (1), la dilatation de la vitre principale (1) par rapport à la zone dans laquelle se trouve l'ouverture de fenêtre (2) de la vitre principale (1), de telle sorte qu'un bord intérieur de l'ouverture de fenêtre (2) suive un tracé plan.

8. Procédé selon l'une des revendications 1 à 7, dans lequel la vitre principale (1) et/ou une vitre pouvant être disposée dans l'ouverture de fenêtre (2) de la vitre principale (1) et pouvant être ouverte sont constituées de verre de sécurité trempé (ESG).

9. Procédé selon l'une des revendications 1 à 8, dans lequel le cadre d'appui (5) du dispositif de support (3) présente un contour bombé dans le sens horizontal et/ou vertical,
et
le dispositif de délimitation (4) est disposé au centre à l'intérieur du cadre d'appui (5) et présente une surface plane (6).

10. Procédé selon la revendication 9, dans lequel le cadre d'appui (5) présente une base rectangulaire avec quatre parois latérales et le contour bombé du cadre d'appui (5), en particulier le contour bombé de chacune des parois latérales, est concave ou convexe.

11. Construction de fenêtre (10), en particulier pour un camping-car ou un mobil-home, fabriquée selon le procédé selon l'une des revendications 1 à 10.

12. Construction de fenêtre (10) selon la revendication 11, dans laquelle la vitre ouvrante est maintenue de manière pivotante sur la structure de cadre (7).

13. Structure de fenêtre (10) selon la revendication 11 ou la revendication 12, comprenant en outre au moins un ressort à gaz prévu sur la vitre ouvrante.

14. Structure de fenêtre (10) selon l'une des revendications 11 à 13, comprenant en outre au moins un élément de verrouillage prévu sur la vitre ouvrante.

15. Construction de fenêtre (10) selon la revendication 14, comprenant en outre au moins un élément d'encliquetage coopérant avec ledit au moins un élément de verrouillage, lequel est disposé sur la structure de cadre (7).
